(19) Europäisches Patentamt
European Patent Office
Office européen des brevets

(11) **EP 4 246 095 A1**

(12) **DEMANDE DE BREVET EUROPEEN**

(43) Date de publication:
**20.09.2023  Bulletin 2023/38**

(21) Numéro de dépôt: **23161015.5**

(22) Date de dépôt: **09.03.2023**

(51) Classification Internationale des Brevets (IPC):
**G01C 23/00** (2006.01)    **B64D 45/04** (2006.01)
**G08G 5/02** (2006.01)    **B64D 43/00** (2006.01)
**G08G 5/00** (2006.01)

(52) Classification Coopérative des Brevets (CPC):
**G01C 23/005; B64D 43/00; G08G 5/0021;
G08G 5/025;** B64D 45/04

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **10.03.2022  FR 2202091**

(71) Demandeur: **Dassault Aviation
75008 Paris (FR)**

(72) Inventeurs:
• **LEPAGE, Sébastien
92214 SAINT CLOUD (FR)**
• **TURPIN, Arnaud
92214 SAINT CLOUD (FR)**

(74) Mandataire: **Lavoix
2, place d'Estienne d'Orves
75441 Paris Cedex 09 (FR)**

(54) **SYSTÈME D AFFICHAGE D'UN AÉRONEF PROPRE À AFFICHER UN SYMBOLE DE PLANCHER D ARRONDI, ET PROCÉDÉ D AFFICHAGE ASSOCIÉ**

(57)    Ce système comprend :
- un afficheur ;
- un ensemble de génération d'affichage sur l'afficheur, propre à afficher dynamiquement sur l'afficheur au moins une ligne d'horizon (52), une échelle de pente (56) par rapport à la ligne d'horizon (52), et un symbole de vecteur vitesse (60).

En approche d'une piste d'atterrissage (13), l'ensemble de génération d'affichage est propre à afficher, sous la ligne d'horizon (52), un symbole de plancher d'arrondi (66), définissant avec la ligne d'horizon (52) une plage de valeurs de pentes possibles pour l'arrondi.

FIG.3

**Description**

La présente invention concerne un système d'affichage d'un aéronef, comprenant :

- un afficheur ;
- un ensemble de génération d'affichage sur l'afficheur, propre à afficher dynamiquement sur l'afficheur au moins une ligne d'horizon, une échelle de pente par rapport à la ligne d'horizon, et un symbole de vecteur vitesse.

Un tel système est destiné à être implanté dans le cockpit d'un aéronef pour être associé à un afficheur du cockpit. L'afficheur est par exemple un afficheur au moins partiellement transparent, tel qu'un écran semi transparent placé devant un pare-brise du cockpit, un système de projection d'images sur le pare-brise du cockpit, un pare-soleil semi-transparent, un viseur de casque, ou encore une lunette semi-transparente proche de l'œil.

En variante, l'afficheur constitue un écran tête basse intégré dans le tableau de bord du cockpit.

Le système d'affichage est destiné à faciliter le pilotage lors de l'atterrissage d'un aéronef sur un terrain.

Des systèmes connus affichent simultanément une ligne d'horizon, une échelle de pente et un symbole de vecteur vitesse qui permettent au pilote de visualiser facilement la pente de l'aéronef par la position relative du symbole de vecteur vitesse par rapport à la ligne d'horizon.

Lors de l'atterrissage d'un aéronef, le pilote utilise la ligne d'horizon affichée pour positionner la pente de l'aéronef par rapport à la piste. Il remonte progressivement le symbole de vecteur vitesse par rapport à la ligne d'horizon, lors de la phase d'arrondi, au-dessus de la piste, de façon à placer le symbole de vecteur vitesse sous la ligne d'horizon, à une distance déterminée de celle-ci correspondant à une pente cible, par exemple de l'ordre de 1° sous la ligne d'horizon, avant le toucher des roues. Une telle manoeuvre permet un toucher confortable de l'aéronef sur la piste.

Pour faciliter la tâche du pilote, EP3109596 décrit l'affichage, sur l'écran, d'un symbole de guidage d'arrondi, qui remonte progressivement vers la ligne d'horizon, suivant une loi de commande nominale. Pour suivre le guidage proposé par la loi de commande, le pilote doit mettre en coïncidence le symbole de guidage d'arrondi avec le symbole de vecteur vitesse, afin de suivre une trajectoire déterminée pour l'arrondi.

Un tel symbole permet donc de faciliter le travail de l'équipage, et d'empêcher un atterrissage trop long ou trop abrupt.

Cependant la mise en coïncidence du symbole de vecteur vitesse avec le symbole de guidage d'arrondi est une tâche dynamique et de précision qui requiert une concentration élevée du pilote.

En outre, la loi de commande nominale impose au pilote de suivre une manoeuvre d'arrondi prédéfinie alors qu'il peut souhaiter dans certains cas effectuer une manoeuvre d'arrondi plus courte avec un toucher plus fort dans le cas d'atterrissage sur piste courte, ou au contraire dans d'autres cas effectuer un atterrissage très doux, notamment s'il dispose d'une longueur de piste très grande par rapport à la longueur requise pour l'aéronef.

Un but de l'invention est donc de fournir un système d'affichage d'aéronef qui permet d'effectuer des manoeuvres d'arrondi adaptables aux besoins de l'équipage, tout en facilitant sa tâche.

À cet effet, l'invention a pour objet un système du type précité, caractérisé en ce qu'en approche d'une piste d'atterrissage, l'ensemble de génération d'affichage est propre à afficher, sous la ligne d'horizon, un symbole de plancher d'arrondi, définissant avec la ligne d'horizon une plage de valeurs de pentes possibles pour l'arrondi.

Le système selon l'invention peut comprendre l'une ou plusieurs des caractéristiques suivantes, prises isolément ou suivant toutes combinaisons techniquement possibles :

- l'ensemble de génération d'affichage, est propre, dans une première phase d'arrondi, à remonter le symbole de plancher d'arrondi vers la ligne d'horizon, et est propre, dans une deuxième phase d'arrondi postérieure à la première phase d'arrondi, à maintenir le symbole de plancher d'arrondi à une distance constante par rapport à la ligne d'horizon ;
- l'ensemble de génération d'affichage est propre à déterminer une loi de commande nominale d'arrondi, définissant un profil d'augmentation de la vitesse verticale durant l'arrondi, la position du symbole de plancher d'arrondi étant définie en fonction de la loi de commande nominale, avec un décalage par rapport à la loi de commande nominale ;
- le décalage par rapport à la loi de commande nominale du symbole de plancher d'arrondi varie en fonction de la vitesse verticale de l'aéronef ;
- l'ensemble de génération d'affichage est propre à afficher un symbole de déclenchement d'arrondi, situé au-dessus du symbole de plancher d'arrondi, et à définir avec le symbole de vecteur vitesse, une position de recommandation de début d'arrondi correspondant avantageusement à la coïncidence horizontale entre le symbole de vecteur vitesse et le symbole de déclenchement d'arrondi ;
- l'ensemble de génération d'affichage est propre à supprimer l'affichage du symbole de déclenchement d'arrondi à partir de la position de recommandation de début d'arrondi ;
- le symbole de déclenchement d'arrondi est positionné en suivant la loi de commande nominale ;

- en approche de la piste d'atterrissage, l'ensemble de gestion d'affichage est propre à engendrer, sur la ligne d'horizon une région déformée en fonction de la pente topographique de la piste d'atterrissage approchée par l'aéronef, le symbole de plancher d'arrondi étant disposé en regard de la région déformée ;
- le symbole de plancher d'arrondi comporte un segment horizontal, parallèle à la ligne d'horizon ;
- le symbole de plancher d'arrondi est centré horizontalement sur le symbole de vecteur vitesse ;
- le système comprend un ensemble de génération d'alerte, propre à engendrer une alerte visuelle, auditive ou tactile, lorsque le symbole de vecteur vitesse passe en dessous du symbole de plancher d'arrondi.

L'invention a également pour objet un procédé d'affichage dans un aéronef, comprenant les étapes suivantes :

- fourniture d'un système tel que défini plus haut ;
- en approche d'une piste d'atterrissage, affichage sur l'afficheur par l'ensemble de génération d'affichage, sous la ligne d'horizon, d'un symbole de plancher d'arrondi définissant avec la ligne d'horizon, une plage de valeurs de pentes possibles pour l'arrondi.

L'invention sera mieux comprise à la lecture de la description qui va suivre, donnée uniquement à titre d'exemple, est faite en se référant aux dessins annexés, sur lesquels :

- La figure 1 est une vue schématique d'un premier système d'affichage d'un aéronef selon l'invention ;
- La figure 2 illustre schématiquement le cockpit d'un aéronef comprenant le premier système d'affichage ;
- Les figures 3 à 4 illustrent l'affichage engendré par le système d'affichage lors de l'approche de l'aéronef vers une piste d'atterrissage non pentue ;
- La figure 5 illustre diverses positions du symbole de vecteur vitesse dans la plage de valeurs possibles de pentes pour l'arrondi définie entre le symbole de plancher d'arrondi et la ligne d'horizon ;
- La figure 6 est une vue analogue à la figure 3, pour une piste présentant une pente positive ;
- La figure 7 est une vue analogue à la figure 5, pour la piste de la figure 6.

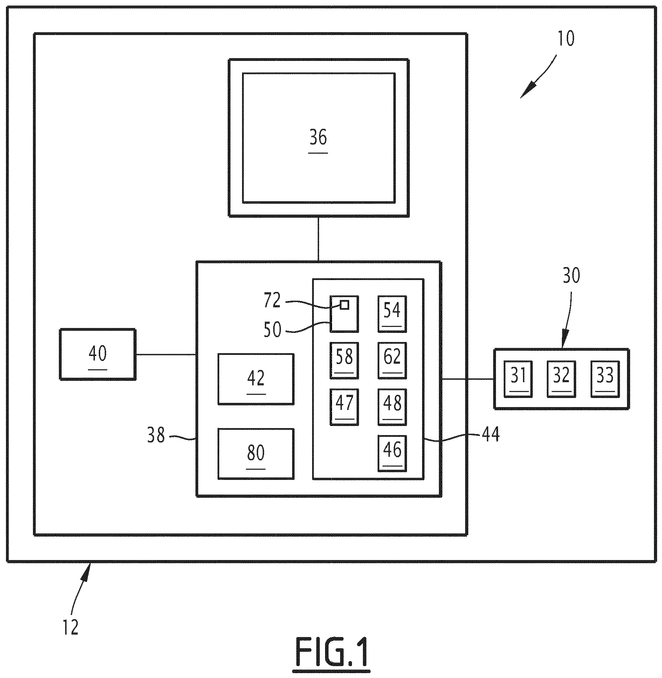

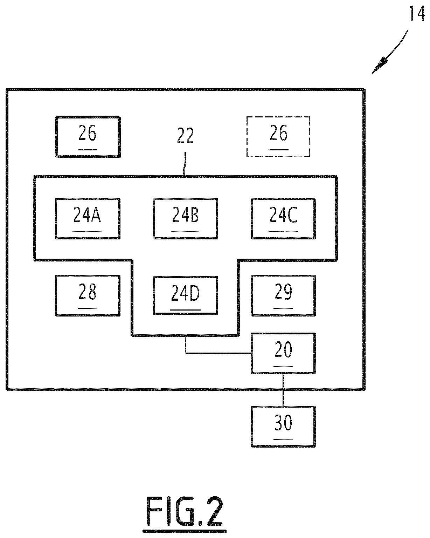

Un premier système 10 d'affichage d'un aéronef 12 selon l'invention est illustré schématiquement par les figures 1 et 2.

Ce système 10 est destiné à être installé dans un aéronef 12, pour permettre l'affichage d'informations sur un afficheur présent dans le cockpit 14 de l'aéronef représenté schématiquement sur la figure 2. Le cockpit 14 de l'aéronef 12 est généralement situé dans l'aéronef 12, à l'avant de celui-ci. Dans une variante, s'appliquant notamment aux drones, le cockpit 14 est situé dans une station de contrôle au sol.

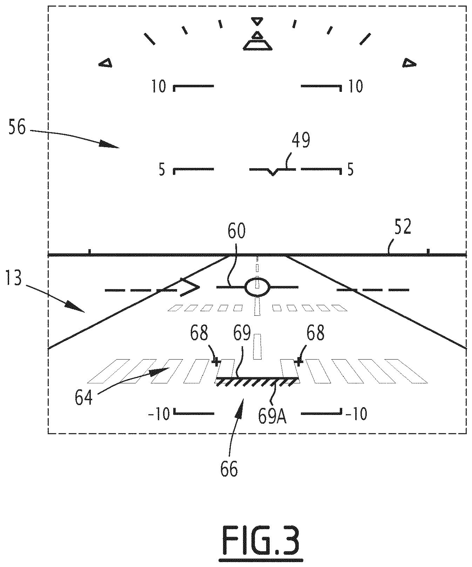

Le système 10 est destiné à assister le pilote de l'aéronef lors d'une phase d'approche, au voisinage d'une piste d'atterrissage 13, visible par exemple sur la figure 3.

En référence à la figure 2, le cockpit 14 est muni d'un système principal d'affichage 22 raccordé à une unité centrale d'avionique 20.

Le système principal 22 permet à l'équipage de piloter l'aéronef, de gérer sa navigation, de surveiller et commander les différents systèmes fonctionnels présents dans l'aéronef. Le système 22 comporte une planche de bord munie d'une pluralité d'écrans de base 24A à 24D formant des afficheurs tête basse.

Dans cet exemple, le cockpit 14 est aussi avantageusement muni d'au moins un écran semi-transparent tête haute 26, placé en regard du pare-brise, voire de deux écrans semi-transparents tête haute 26.

Le cockpit 14 est par ailleurs muni d'un organe de commande 28 du pilotage de l'aéronef, tel qu'une manette ou un manche.

Il comporte avantageusement un système de pilotage automatique 29 propre à être activé par l'équipage.

De manière connue, les écrans de base 24A et 24C sont par exemple des écrans primaires d'affichage destinés à l'affichage de paramètres de vol de l'aéronef. Les écrans de base 24B et 24D sont par exemple des écrans multifonctionnels de navigation et/ou de suivi et de commande des systèmes d'avionique.

Le système d'affichage principal 22 est muni d'un ensemble de gestion d'affichage (non représenté) propre à afficher les différentes fenêtres présentes sur ces écrans 24A à 24D.

L'unité centrale d'avionique 20 est raccordée à un système 30 de capteurs de mesure de paramètres avions de l'aéronef 12.

En référence à la figure 1, le système 30 de capteurs de mesure comporte par exemple des capteurs de mesure de paramètres extérieurs à l'aéronef tel que la température, la pression ou la vitesse, des capteurs de mesure de paramètres internes à l'aéronef et à ses différents systèmes fonctionnels, et des capteurs de positionnement, tel que des capteurs 31 de position géographique, notamment un capteur GPS, des capteurs 32 de détermination de la pente de l'aéronef, notamment au moins une centrale inertielle, et un capteur 33 de détermination d'une hauteur par rapport au sol, notamment un radioaltimètre.

Les capteurs du système 30 sont propres à fournir une information sur la position géographique de l'aéronef 12, sur sa vitesse, son cap et son attitude (assiette longitudinale, angle de roulis).

En référence à la figure 1, le système d'affichage 10 selon l'invention est raccordé au système de capteurs de mesure 30.

Le système d'affichage 10 comporte au moins un afficheur 36, et un ensemble 38 de génération d'affichage sur l'afficheur 36, raccordé à l'afficheur 36 et au système de capteurs de mesure 30. Le système 10 comporte en outre une interface homme/machine 40.

L'afficheur 36 est par exemple un des écrans 24A à 24B ou/et est l'écran semi-transparent tête haute 26 du cockpit 14. Dans d'autres variantes, l'afficheur 36 est par exemple un système de projection d'images sur le pare-brise du cockpit, un pare-soleil semi-transparent, un viseur de casque ou une lunette semi-transparente proche de l'oeil.

Dans un premier mode de réalisation, qui sera décrit par la suite, l'afficheur 36 du système d'affichage 10 selon l'invention est l'écran semi-transparent tête haute 26 du cockpit 14.

L'ensemble de génération d'affichage 38 comporte au moins un processeur 42 et au moins une mémoire 44 contenant une pluralité de modules logiciels propres à être exécutés par le processeur 42. Il comporte une base de données 46 de caractéristiques de pistes d'atterrissage, par exemple stockée dans la mémoire 44.

L'ensemble de génération d'affichage 38 comporte un module 48 de récupération des données des capteurs de mesure du système 30, en particulier du capteur 32 de mesure de la pente de l'aéronef 12, et du capteur 33 de mesure de hauteur de l'aéronef 12 par rapport au sol.

L'ensemble de génération d'affichage 38 comporte en outre un module 47 de génération d'un symbole 49 de maquette de l'aéronef, un module 50 de génération d'une ligne 52 d'horizon artificiel, et un module 54 associé de génération d'une échelle de pente 56.

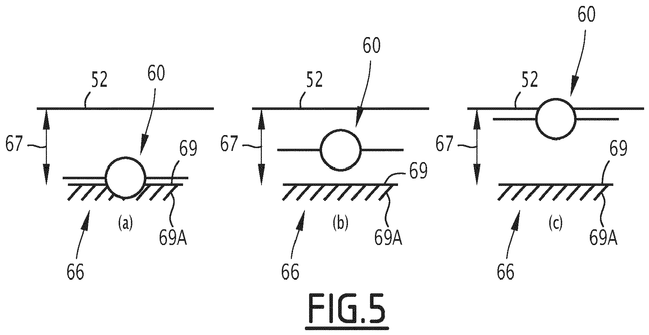

L'ensemble de génération d'affichage 38 comprend également un module 58 de génération d'un symbole 60 de vecteur vitesse. Il comprend un module 62 de génération d'un symbole 64 de déclenchement d'arrondi, visible sur la figure 3, et d'un symbole 66 de plancher d'arrondi, propre à définir, avec la ligne d'horizon artificiel 52, une plage 67 de valeurs de pentes possibles pour l'arrondi (voir figure 5).

L'ensemble de génération d'affichage 38 comporte en outre des modules (non représentés) de génération d'autres symboles représentatifs de paramètres de vol, par exemple un indicateur d'altitude, un indicateur de badin, de vitesse verticale, de vitesse sol, d'information moteur, et de conformation de sustentation de l'aéronef.

Le module de génération 47 est propre à engendrer l'affichage d'un symbole 49 de maquette avion qui matérialise une projection à l'infini de l'axe longitudinal de l'aéronef 12, à partir des données reçues des capteurs du système de capteurs de mesure 30.

Le module de génération 50 est propre à déterminer, à partir des données reçues des capteurs du système de capteurs de mesure 30, la position d'une ligne d'horizon artificiel 52 par rapport à l'attitude courante de l'aéronef. Cette ligne d'horizon 52 est droite lorsque l'aéronef 12 évolue ailes à plat, et s'incline en fonction de l'angle de gîte de l'aéronef 12.

Le module de génération 54 est propre à engendrer une échelle de pente 56 centrée horizontalement sur la ligne d'horizon 52. L'échelle de pente 56 est par exemple graduée en degrés de pente par rapport à la ligne d'horizon artificiel 52.

Le module de génération 58 est propre à engendrer l'affichage d'un symbole de vecteur vitesse 60 indiquant la direction du vecteur vitesse de l'aéronef 12, sur la base des données reçues des capteurs du système 30. L'écart vertical entre la ligne d'horizon artificiel 52, représente la pente sol Y de l'aéronef 12, prise par rapport à un sol non incliné.

Le module de génération 62 est propre à engendrer l'affichage du symbole de déclenchement d'arrondi 64, en fin d'approche vers la piste d'atterrissage 13.

Il est propre à afficher le symbole de déclenchement d'arrondi 64 pour avertir l'équipage de la proximité, puis de l'atteinte d'une position de recommandation de début de manoeuvre d'arrondi, de préférence d'une hauteur recommandée de début de manoeuvre d'arrondi. La position de recommandation de début de manoeuvre d'arrondi est de préférence déterminée en tenant compte de la pente topographique de la piste d'atterrissage 13.

La position de recommandation de début de manoeuvre d'arrondi est déterminée par le module de génération 62 avantageusement en fonction d'une information de pente topographique issue d'une base de données de la piste d'atterrissage 13, déterminée à l'aide de la base de données de pistes d'atterrissage 46, à l'aide d'une application de calcul, soit en utilisant les altitudes de seuil et de fin de piste et la longueur de piste contenues dans la base de données 46, soit en utilisant directement une pente contenue dans la base de données 46.

La position de recommandation de début de manoeuvre d'arrondi est déterminée en tenant également compte de la pente avion mesurée $\gamma$.

Avantageusement, le module de génération 62 comporte une base de données de hauteurs de début de manoeuvre d'arrondi, en fonction de la pente avion Y mesurée par le capteur 32 et éventuellement, de la pente topographique I de la piste d'atterrissage 13, telle que déterminée par l'application de calcul, notamment en fonction de la pente apparente $\gamma_R$ calculée à partir de la pente avion Y et de la pente topographique I.

Le module de génération 62 est propre à signaler l'atteinte de la hauteur recommandée de début de manoeuvre d'arrondi en plaçant le symbole de déclenchement d'arrondi 64 en regard du symbole de vecteur vitesse 60.

De préférence, pour signaler que l'aéronef 12 a atteint la hauteur recommandée de début d'arrondi, le symbole de déclenchement d'arrondi 64 est disposé au même niveau horizontal que le symbole de vecteur vitesse 60, en coïncidence horizontale avec celui-ci.

Dans cet exemple, le symbole de déclenchement d'arrondi 64 comporte au moins un pictogramme 68, de préférence deux pictogrammes 68 au même niveau horizontal, destinés à se positionner latéralement de part et d'autre du symbole de vecteur vitesse 60. Dans l'exemple représenté sur la figure 3, les pictogrammes 68 sont des croix.

Pour permettre au pilote d'anticiper l'atteinte de la position de recommandation de début de manoeuvre d'arrondi, le module de génération 62 est avantageusement propre à afficher le symbole de déclenchement d'arrondi 64 sous le symbole de vecteur vitesse 60 avant l'atteinte de la position de recommandation de début de manoeuvre d'arrondi et à le rapprocher verticalement du symbole de vecteur vitesse 60 pour atteindre le symbole de vecteur vitesse 60 à la position de recommandation de début de manoeuvre d'arrondi.

Une fois la position de recommandation de début de manoeuvre d'arrondi atteinte, le module de génération 62 est de préférence propre à faire disparaitre l'affichage du symbole de déclenchement d'arrondi 64.

Le module de génération 62 est propre à engendrer l'affichage du symbole de plancher d'arrondi 66 sous la ligne d'horizon 52, et en regard de celle-ci, pour définir la plage 67 de valeurs de pentes possibles pour l'arrondi.

Le symbole de plancher d'arrondi 66 comporte ici un segment horizontal 69, destiné à s'étendre parallèlement à la ligne d'horizon 52 pour définir la plage 67 de valeurs possible de pentes pour l'arrondi, et des hachures 69A qui s'étendent vers le bas à partir du segment 69 pour montrer une plage non recommandée de valeurs de pentes.

Le module de génération 62 est propre, lors d'une phase initiale dans laquelle le symbole de déclenchement d'arrondi 64 est toujours affiché, de faire remonter le symbole de plancher d'arrondi 66 conjointement avec le symbole de déclenchement d'arrondi 64.

Le symbole de plancher d'arrondi 66 est décalé verticalement par rapport à la position du symbole de déclenchement d'arrondi 64 pour apparaitre sous le symbole de déclenchement d'arrondi 64.

Puis, dans une première phase de l'arrondi, une fois que le symbole de déclenchement d'arrondi 64 a disparu, le module de génération 62 est propre à faire remonter le symbole de plancher d'arrondi 66 vers la ligne d'horizon 52.

Dans une deuxième phase de l'arrondi, le module de génération 62 est propre à maintenir le symbole de plancher d'arrondi 66 sous la ligne d'horizon 52, avec un décalage vertical constant par rapport à la ligne d'horizon 52, ce décalage correspondant à la gamme 67 de pentes possibles, au moment du toucher de l'aéronef 12 sur la piste d'atterrissage 13.

De préférence, le module de génération 62 est propre à déterminer une loi de commande nominale d'arrondi, définissant un profil nominal d'augmentation de la vitesse verticale en fonction de la hauteur durant l'arrondi. Le profil nominal est celui qui serait suivi par un symbole de guidage d'arrondi potentiellement affiché sur l'afficheur 36.

A chaque instant, le module de génération 62 est propre à afficher le symbole de plancher d'arrondi 66 sur la base de la loi de commande nominale d'arrondi avec un décalage vertical donné vers le bas.

La loi de commande nominale est représentative d'un profil d'augmentation de la vitesse verticale durant l'arrondi.

La loi de commande relie par exemple, pour chaque pente Y, ou si la pente de la piste d'atterrissage 13 est prise en compte, pour chaque pente apparente $\gamma_R$ de l'aéronef 12 par rapport à la piste d'atterrissage 13, une hauteur par rapport à la piste d'atterrissage 13 à une vitesse verticale cible, et par suite à une pente cible sur l'échelle de pentes 56.

La loi de commande permet de passer d'une première vitesse verticale de début d'arrondi, lorsque l'aéronef 12 atteint la hauteur recommandée de début de manoeuvre d'arrondi, à une deuxième vitesse verticale cible de fin d'arrondi supérieure à la première vitesse verticale lorsque l'aéronef 12 atteint la fin d'arrondi avant le toucher des roues. Elle tient compte avantageusement de la pente topographique de la piste d'atterrissage 13.

De préférence, la deuxième vitesse verticale cible de fin d'arrondi, qui s'applique à la fin d'arrondi est calculée en fonction de la pente topographique de la piste d'atterrissage 13.

Le module de génération 62 est propre à déterminer à chaque instant la deuxième vitesse verticale cible en fonction de la pente topographique de la piste d'atterrissage 13. La pente topographique, est initialement estimée à l'aide des informations topographiques issue d'une base de données tel que décrit plus haut, puis est obtenue par calcul à l'aide des données de hauteur et des données de pente mesurées respectivement à l'aide des capteurs 33 et 32.

Le décalage vertical du symbole de plancher d'arrondi 66 par rapport à la position verticale qu'il occuperait s'il suivait la loi de commande nominale est par exemple constant sur au moins une partie de la première phase de l'arrondi et/ou de la deuxième phase de l'arrondi.

Le décalage vertical est par exemple calculé en fonction de la pente $\gamma$, ou si la pente de la piste d'atterrissage 13 est prise en compte, en fonction de la pente apparente $\gamma_R$. Il est également avantageusement calculé en fonction de la hauteur par rapport à la piste d'atterrissage 13 à une vitesse verticale cible.

Dans un premier mode de réalisation, le décalage vertical est constant, et se traduit par une différence de vitesse verticale constante par rapport à la loi nominale égale avantageusement à la consigne finale de la loi nominale. Cette valeur constante par exemple égale à -3 pieds par seconde, soit -1 mètres par seconde. Ainsi, la consigne de la loi nominale est à mi-distance entre la ligne d'horizon 52 et le symbole de plancher d'arrondi 66.

En variante, le décalage vertical varie lors de la première phase de l'arrondi et/ou de la deuxième phase de l'arrondi, par exemple en fonction de la hauteur par rapport à la piste d'atterrissage, de la pente $\gamma$, $\gamma_R$, ou/et de la vitesse verticale Vz, VzR, où Vz est la vitesse verticale prise par rapport à un plan horizontal, et VzR est la vitesse verticale apparente, prise en tenant compte de la pente de la piste d'atterrissage 13.

Dans ce cas, le décalage par rapport à la loi nominale varie, par exemple augmente lorsque la pente $\gamma$, $\gamma_R$ est plus élevée.

Suivant la loi de commande et le décalage prédéfini, le symbole de plancher d'arrondi 66 est déplacé par rapport à la ligne d'horizon 52, en traduisant sous forme d'une pente sur l'échelle de pente avion 56, la vitesse verticale cible et le décalage par rapport à la vitesse verticale cible, obtenus à la hauteur mesurée à chaque instant, par le capteur 33.

Puis, une fois la fin d'arrondi atteinte, le module de génération 62 est propre à maintenir le symbole de plancher d'arrondi 66 à une distance constante de la ligne d'horizon 52, correspondant à la plage 67 de valeurs de pentes souhaitée en fin d'arrondi, permettant un toucher adéquat de l'aéronef 12 sur la piste d'atterrissage 13.

Ainsi, comme illustré par la figure 5, le pilote dispose d'une plage 67 de valeurs de pentes possibles pour effectuer l'arrondi, cette plage 67 étant délimitée par la hauteur entre la ligne d'horizon 52 et le symbole de plancher d'arrondi 66.

Le pilote peut alors ajuster la vitesse verticale de toucher des roues, en fonction de son besoin, dans la plage 67 proposée. Ainsi, comme illustré par la figure 5(a), lorsqu'un atterrissage court est nécessaire, le pilote rapproche le symbole de vecteur vitesse 60 du symbole de plancher d'arrondi 66 pour se placer au voisinage de celui-ci.

Lors d'un atterrissage normal (voir figure 5(b)) le pilote se place sensiblement au milieu de la plage de valeurs 67, ce milieu correspondant sensiblement à la pente définie par la loi de commande nominale pour l'arrondi.

Dans le cas où le pilote dispose d'une grande longueur de piste par rapport aux capacités de son aéronef, et qu'il souhaite effectuer un atterrissage de confort, il se place alors plus proche de la ligne d'horizon 52, comme illustré sur la figure 5(c).

En tout état de cause, la présence d'une plage 67 permet au pilote de ne pas avoir à suivre très précisément une pente cible en suivant un symbole de guidage d'arrondi. Il peut donc de se concentrer sur l'ensemble des taches nécessaires à l'atterrissage, et en particulier observer le terrain à l'extérieur de l'aéronef.

Selon son souhait, le pilote peut ajuster l'arrondi pour que le toucher soit le plus proche possible du seuil de la piste, ou au contraire le plus doux possible lorsqu'il dispose de suffisamment de longueur de piste disponible. Les touchers obtenus sont donc confortables et adaptables pour les passagers, et garantissent une sécurité maximale pour l'aéronef.

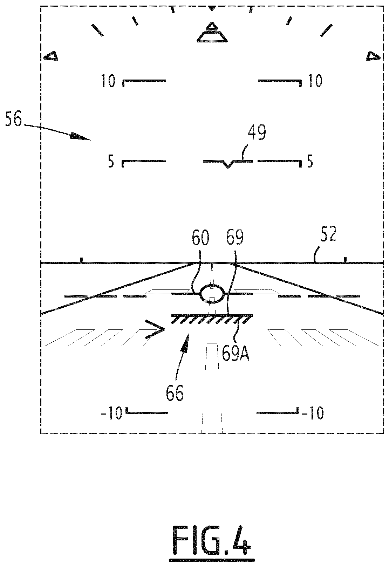

Le fonctionnement du système d'affichage 10 selon l'invention, lors de l'approche vers une piste d'atterrissage 13 va maintenant être décrit, en référence aux figures 3 à 5.

Initialement, l'aéronef 12 descend vers la piste d'atterrissage 13. Comme illustré par la figure 3, le module de génération 50 affiche la ligne d'horizon 52, le module de génération 54 engendre l'affichage d'une échelle de pente 56 et le module de génération 58 engendre l'affichage d'un symbole de vecteur vitesse 60 dont la distance verticale à la ligne d'horizon 52 traduit la pente avion, sur l'échelle de pente 56.

Puis, à une distance donnée de la piste d'atterrissage 13, l'équipage sélectionne la piste d'atterrissage 13 visée. L'application de calcul récupère des informations topographiques dans la base de données de piste 46.

Les informations topographiques issues d'une base de données récupérées sont par exemple l'altitude au seuil de piste, l'altitude en fin de piste et la longueur de la piste.

Sur la base des informations topographiques récupérées dans la base de données 46, l'application de calcul calcule éventuellement une pente topographique issue d'une base de données de la piste d'atterrissage 13.

Par ailleurs, comme illustré par la figure 3, pour permettre au pilote d'anticiper l'atteinte de la position de recommandation de début de manoeuvre d'arrondi, le module de génération 62 est propre à afficher le symbole de déclenchement d'arrondi 64, sous le symbole de vecteur vitesse 60 avant la position de recommandation de début de manoeuvre d'arrondi et à le rapprocher verticalement du symbole de vecteur vitesse 60 jusqu'à la position de recommandation de début de manoeuvre d'arrondi.

La position de recommandation de début d'arrondi est alors déterminée par le module de génération 62 avantageusement en fonction d'une information de pente topographique issue d'une base de données de la piste d'atterrissage 13, déterminée à l'aide de la base de données de pistes d'atterrissage 46, par l'application de calcul comme décrit plus haut.

La position de recommandation de début de manoeuvre d'arrondi est en outre déterminée en tenant compte de la pente avion Y mesurée par le capteur 32.

Le module de génération 62 signale l'atteinte de la position de recommandation de début de manoeuvre d'arrondi en plaçant le symbole de déclenchement d'arrondi 64 en regard horizontalement du symbole de vecteur vitesse 60.

A la hauteur recommandée de début de manoeuvre d'arrondi, le symbole de déclenchement d'arrondi 64 est disposé au même niveau horizontal que le symbole de vecteur vitesse 60, en coïncidence horizontale avec le symbole de vecteur vitesse 60, de préférence entre les pictogrammes 68.

Comme indiqué plus haut, le symbole de déclenchement d'arrondi 64 disparait alors. Le symbole de plancher d'arrondi 66 délimite avec la ligne d'horizon 52 la plage de valeurs de pentes possibles 67 durant l'arrondi.

Ensuite, le module de génération 62 commande le rapprochement du symbole de plancher d'arrondi vers la ligne d'horizon 52.

Le rapprochement suit la loi de commande nominale prédéterminée, avec un décalage, comme décrit plus haut.

La loi de commande correspond à une variation de vitesse verticale en fonction de la hauteur mesurée par rapport à la piste d'atterrissage 13, pour passer d'une première vitesse verticale cible à la position de recommandation de début de manoeuvre d'arrondi à une deuxième vitesse verticale cible supérieure à la première vitesse verticale cible en fin d'arrondi.

Le module de génération 62 détermine à chaque instant la deuxième vitesse verticale cible en fonction de la pente topographique de la piste d'atterrissage 13. La pente topographique est initialement estimée à l'aide des informations topographiques issues d'une base de données, puis est mesurée à partir des données reçues des capteurs 32 et 33, comme indiqué plus haut.

À chaque instant, le module de génération 62 reçoit une donnée de hauteur mesurée à l'aide du capteur 33, et détermine la distance verticale séparant le symbole de plancher d'arrondi 66 de la ligne d'horizon 52 sur la base de la loi de commande et du décalage calculé.

Le symbole de guidage d'arrondi 66 se rapproche donc progressivement de la ligne d'horizon 52, en définissant avec la ligne d'horizon 52 une plage 67 de valeurs de pentes possibles pour effectuer l'arrondi.

Le pilote ajuste la vitesse verticale de toucher des roues, en fonction de son besoin, dans la plage 67 proposée, comme illustré par les options (a), (b) et (c) sur la figure 5.

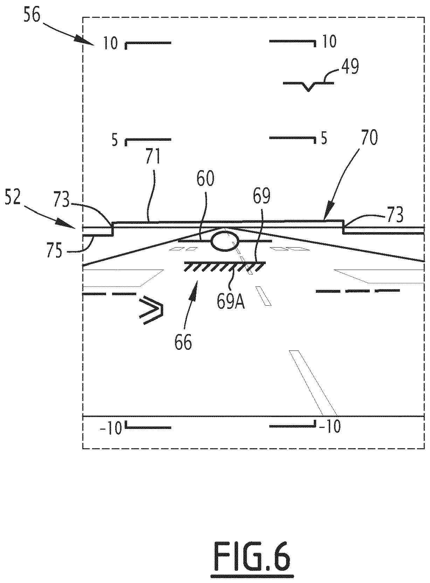

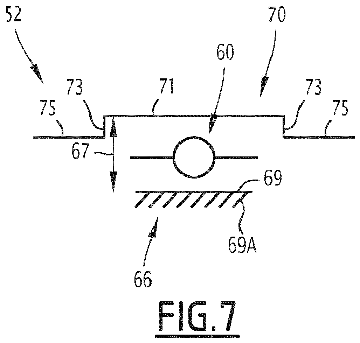

Dans une variante illustrée par les figures 6 et 7, dans au moins une phase d'approche de l'aéronef 12 vers la piste d'atterrissage 13, le module 50 est propre à engendrer, sur la ligne d'horizon 52, une région déformée 70 en fonction de la pente topographique de la piste d'atterrissage 13, comme décrit dans le brevet européen EP-B-3109598.

Dans l'exemple représenté sur la figure 6, la région déformée 70 est une région de la ligne d'horizon 52 centrée sur le symbole de vecteur de vitesse 60. Elle présente une forme de créneau avec un segment 71 parallèle au reste 75 de la ligne d'horizon 52, et deux segments de liaison 73 inclinés ou perpendiculaires par rapport au reste 75 de la ligne d'horizon 52.

L'échelle de pente 56 centrée horizontalement sur le reste 75 de la ligne d'horizon 52, à l'écart de la région déformée 70

En variante (non illustrée), la région déformée 70 présente une forme incurvée, par exemple une forme de bosse. La forme incurvée présente un sommet à une hauteur, prise par rapport au reste 75 de la ligne d'horizon 52, fonction de la pente topographique de la piste d'atterrissage 13.

La région déformée 70 s'étend vers le haut lorsque la pente topographique de la piste d'atterrissage 13 est positive. Elle s'étend vers le bas lorsque la pente topographique de la piste d'atterrissage 13 est négative.

En référence à la figure 1, le module de génération 50 comporte une application logicielle de calcul 72 propre à calculer une déformation locale de la ligne d'horizon 52 dans la région déformée 70, en fonction de la pente topographique de la piste d'atterrissage 13.

Par « pente topographique », on entend la pente réelle de la piste d'atterrissage 13 sur le terrain.

L'écart vertical entre la région déformée 70 et le symbole de vecteur vitesse 60 représente alors la pente sol $\gamma_R$ apparente de l'aéronef 12 par rapport à la piste d'atterrissage 13, tenant compte de la pente topographique de la piste d'atterrissage 13.

La déformation de la région déformée 70 est ici caractérisée par sa hauteur maximale, prise verticalement par rapport au reste de la ligne d'horizon 52.

L'application de calcul 72 est propre à récupérer au moins une information topographique caractéristique de la piste 13, issue d'une base de données ou mesurée, et à calculer la déformation de la région déformée 70 en fonction de la ou des informations topographiques caractéristiques.

Avantageusement, dans une première phase d'évolution de l'aéronef 12 à distance axialement de la piste d'atterrissage 13, l'application logicielle de calcul 72 est propre à récupérer au moins une information topographique dans la base de données de pistes d'atterrissage 46, puis à calculer la déformation locale de la ligne d'horizon 52 dans la région déformée 70 en fonction de la ou de chaque information topographique issue d'une base de données.

L'information topographique issue d'une base de données est par exemple l'altitude à un point donné de la piste et/ou la longueur de la piste. La base de données 46 comporte par exemple pour chaque piste d'atterrissage 13, l'altitude du seuil de piste, l'altitude de la fin de piste et la longueur de la piste.

L'application logicielle de calcul 72 est alors propre à calculer une pente estimée de la piste 13 sur la base de l'altitude du seuil de piste, de l'altitude de la fin de piste et de la longueur de la piste.

Dans une variante, l'information topographique issue d'une base de données contenue dans la base de données 46 est directement la pente topographique dans la zone de toucher autour du point cible de toucher.

Dans une deuxième phase d'évolution de l'aéronef 12 au-dessus de la piste d'atterrissage 13, l'application logicielle de calcul 72 est propre à calculer en continu une information topographique caractéristique mesurée de la piste 13, en fonction des données des capteurs 31, 33 de mesure de la pente avion et de la hauteur de l'aéronef par rapport au sol récupérées par le module de récupération de données 48.

En référence à la figure 10, cette information topographique est une pente calculée I et est déterminée notamment à partir des mesures collectées en deux points successifs P1, P2 de la trajectoire de l'aéronef 12 au temps de passage successifs t1, t2, et notamment des hauteurs h1, h2 mesurées aux points P1, P2, de la pente avion mesurée entre les points P1 et P2, et de la vitesse horizontale VH de l'aéronef 12.

La pente topographique locale I de la piste est par exemple estimée par les équations suivantes :

$$\Delta = \arctan [\ (h2 - h1) / (VH \times (t2\text{-}t1)] \qquad (1)$$

$$I = \gamma - \Delta \qquad (2)$$

La hauteur maximale de la région déformée 70 est alors calculée par l'application de calcul 72 pour correspondre à la valeur de la pente topographique issue d'une base de données ou mesurée de la piste d'atterrissage 13, prise sur l'échelle de pente 56 engendrée par le module 54.

Par exemple, si la pente topographique issue d'une base de données ou mesurée est de N degrés, la hauteur maximale de la région déformée 70 par rapport au reste 75 de la ligne d'horizon 52 est de N degrés sur l'échelle de pente 56 engendrée par le module 54.

Dans la première phase d'évolution de l'aéronef 12 à l'écart de la piste d'atterrissage 13, la hauteur de la région déformée 70 reste constante. Dans une deuxième phase d'évolution de l'aéronef 12, au-dessus de la piste d'atterrissage 13, la hauteur de la région déformée 70 évolue en continu en fonction de la pente topographique locale de la piste 13 au-dessous de l'aéronef 12 mesurée à l'aide des capteurs du système 30.

Dans cet exemple, la région déformée 70 engendrée par le module 50 est centrée par rapport à l'échelle de pente 56, et par rapport au symbole de vecteur vitesse 60.

La région déformée 70 présente ici une largeur supérieure à celle du symbole de vecteur vitesse 60, et de préférence, à celle de l'extrémité de la piste d'atterrissage 13.

La largeur de la région déformée 70 reste cependant de préférence inférieure à 80 %, avantageusement inférieure à 50% de la largeur totale de la ligne d'horizon 52.

La largeur de la région déformée 70 est par exemple supérieure à celle du symbole de vecteur vitesse 60, et inférieure à deux fois la largeur du symbole de vecteur vitesse 60.

La région déformée 70 est donc localisée. Elle suit l'évolution latérale du symbole de vecteur vitesse 60, lors d'une évolution vent de travers.

En référence à la figure 7, le module de génération 62 est propre à afficher le symbole de plancher d'arrondi 66 en dessous et en regard de la région déformée 70. La plage 67 de valeurs de pentes possibles pour l'arrondi est donc définie en tenant compte de la pente de la piste par la hauteur séparant la région déformée du symbole de plancher d'arrondi 66.

Dans une variante non représentée, le système d'affichage 10 comporte un ensemble 80 de génération d'alertes, propre à engendrer une alerte visuelle, auditive ou/et tactile lorsque le symbole de vecteur vitesse 60 passe en dessous du symbole de plancher d'arrondi 66, en particulier en dessous du segment horizontal 69 du symbole de plancher d'arrondi 66. L'alerte s'affiche par exemple sur l'afficheur 36.

Dans encore une autre variante, le système de pilotage automatique 29 est propre à automatiquement prendre le contrôle de l'aéronef 12 pour modifier la pente avion, afin de maintenir le symbole de vecteur vitesse 60 dans la plage de valeur possible d'arrondi 67 au cours de l'arrondi.

**Revendications**

1. Système (10) d'affichage d'un aéronef (12) comprenant :

   - un afficheur (36) ;

- un ensemble de génération d'affichage (38) sur l'afficheur (36), propre à afficher dynamiquement sur l'afficheur (36) au moins une ligne d'horizon (52), une échelle de pente (56) par rapport à la ligne d'horizon (52), et un symbole de vecteur vitesse (60) ;

**caractérisé en ce qu'**en approche d'une piste d'atterrissage (13), l'ensemble de génération d'affichage (38) est propre à afficher, sous la ligne d'horizon (52), un symbole de plancher d'arrondi (66), définissant avec la ligne d'horizon (52) une plage (67) de valeurs de pentes possibles pour l'arrondi.

2. Système (10) selon la revendication 1, dans lequel l'ensemble de génération d'affichage (38), est propre, dans une première phase d'arrondi, à remonter le symbole de plancher d'arrondi (66) vers la ligne d'horizon (52), et est propre, dans une deuxième phase d'arrondi postérieure à la première phase d'arrondi, à maintenir le symbole de plancher d'arrondi (66) à une distance constante par rapport à la ligne d'horizon (52).

3. Système (10) selon l'une quelconque des revendications précédentes, dans lequel l'ensemble de génération d'affichage (38) est propre à déterminer une loi de commande nominale d'arrondi, définissant un profil d'augmentation de la vitesse verticale durant l'arrondi, la position du symbole de plancher d'arrondi (66) étant définie en fonction de la loi de commande nominale, avec un décalage par rapport à la loi de commande nominale.

4. Système (10) selon la revendication 3, dans lequel le décalage par rapport à la loi de commande nominale du symbole de plancher d'arrondi (66) varie en fonction de la vitesse verticale de l'aéronef (12).

5. Système (10) selon l'une quelconque des revendications précédentes, dans lequel l'ensemble de génération d'affichage (38) est propre à afficher un symbole de déclenchement d'arrondi (64), situé au-dessus du symbole de plancher d'arrondi (66), et à définir avec le symbole de vecteur vitesse (60), une position de recommandation de début d'arrondi correspondant avantageusement à la coïncidence horizontale entre le symbole de vecteur vitesse (60) et le symbole de déclenchement d'arrondi (64).

6. Système (10) selon la revendication 5, dans lequel l'ensemble de génération d'affichage (38) est propre à supprimer l'affichage du symbole de déclenchement d'arrondi (64) à partir de la position de recommandation de début d'arrondi.

7. Système (10) selon l'une quelconque des revendications 5 ou 6, prises en combinaison avec la revendication 2, dans lequel le symbole de déclenchement d'arrondi (64) est positionné en suivant la loi de commande nominale.

8. Système (10) d'affichage selon l'une quelconque des revendications précédentes, dans lequel, en approche de la piste d'atterrissage (13), l'ensemble de gestion d'affichage (38) est propre à engendrer, sur la ligne d'horizon (52) une région déformée (70) en fonction de la pente topographique de la piste d'atterrissage (13) approchée par l'aéronef (12), le symbole de plancher d'arrondi (66) étant disposé en regard de la région déformée (70).

9. Système (10) selon l'une quelconque des revendications précédentes, dans lequel le symbole de plancher d'arrondi (66) comporte un segment horizontal (69), parallèle à la ligne d'horizon (52).

10. Système (10) selon la revendication 9, dans lequel le symbole de plancher d'arrondi (66) est centré horizontalement sur le symbole de vecteur vitesse (60).

11. Système (10) selon l'une quelconque des revendications précédentes, comprenant un ensemble (80) de génération d'alerte, propre à engendrer une alerte visuelle, auditive ou tactile, lorsque le symbole de vecteur vitesse (60) passe en dessous du symbole de plancher d'arrondi (66).

12. Procédé d'affichage dans un aéronef (12), comprenant les étapes suivantes :

- fourniture d'un système (10) selon l'une quelconque des revendications précédentes ;
- en approche d'une piste d'atterrissage (13), affichage sur l'afficheur (36) par l'ensemble de génération d'affichage (38), sous la ligne d'horizon (52), d'un symbole de plancher d'arrondi (66) définissant avec la ligne d'horizon (52), une plage (67) de valeurs de pentes possibles pour l'arrondi.

FIG.1

14

```
┌─────────────────────────────────────────────┐
│                                              │
│   ┌──────────┐        22      ┌ ─ ─ ─ ─ ┐    │
│   │    26    │                   26           │
│   └──────────┘                └ ─ ─ ─ ─ ┘    │
│   ┌─────────────────────────────────────┐    │
│   │  ┌──────┐   ┌──────┐   ┌──────┐      │    │
│   │  │ 24A  │   │ 24B  │   │ 24C  │      │    │
│   │  └──────┘   └──────┘   └──────┘      │    │
│   │  ┌──────┐   ┌──────┐   ┌──────┐      │    │
│   │  │  28  │   │ 24D  │   │  29  │      │    │
│   │  └──────┘   └──────┘   └──────┘      │    │
│   └───────────────────────┘   ┌──────┐       │
│                               │  20  │       │
│                               └──────┘       │
└──────────────────────────────────┼──────────┘
                                ┌──────┐
                                │  30  │
                                └──────┘
```

## FIG.2

56

49

60    52

13

68   69   68

64

-10    69A    -10

66

## FIG.3

**FIG.4**

## FIG.5

FIG.6

FIG.7

Europäisches
Patentamt

European
Patent Office

Office européen
des brevets

# RAPPORT DE RECHERCHE EUROPEENNE

Numéro de la demande

EP 23 16 1015

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2016/046386 A1 (EBERLE MATTHIAS [FR]) 18 février 2016 (2016-02-18) | 1-7,9-12 | INV. G01C23/00 B64D45/04 G08G5/02 |
| Y | * alinéas [0059], [0066], [0071], [0073], [0074]; figures 3, 6 * ----- | 8 | B64D43/00 G08G5/00 |
| X | James Albright: "Heads Up Display – Symbology", , 1 décembre 2013 (2013-12-01), XP055251328, Extrait de l'Internet: URL:http://code7700.com/g450_hud_symbology .html [extrait le 2016-02-18] * page 9 * ----- | 1,12 | |
| Y,D | EP 3 109 596 A1 (DASSAULT AVIAT [FR]) 28 décembre 2016 (2016-12-28) | 8 | |
| A | * alinéas [0042], [0074] * ----- | 5 | |

**DOMAINES TECHNIQUES RECHERCHES (IPC)**

G01C
G08G
B64D

Le présent rapport a été établi pour toutes les revendications

| Lieu de la recherche | Date d'achèvement de la recherche | Examinateur |
|---|---|---|
| La Haye | 14 août 2023 | Rocca, Simone |

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 16 1015

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-08-2023

| Document brevet cité au rapport de recherche | Date de publication | Membre(s) de la famille de brevet(s) | | Date de publication |
|---|---|---|---|---|
| US 2016046386 A1 | 18-02-2016 | CN | 105235911 A | 13-01-2016 |
| | | FR | 3023368 A1 | 08-01-2016 |
| | | US | 2016046386 A1 | 18-02-2016 |
| EP 3109596 A1 | 28-12-2016 | EP | 3109596 A1 | 28-12-2016 |
| | | EP | 3757519 A1 | 30-12-2020 |
| | | FR | 3038045 A1 | 30-12-2016 |
| | | US | 2016379502 A1 | 29-12-2016 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3109596 A

- EP 3109598 B